Europäisches Patentamt

European Patent Office

Office européen des brevets

(19)

(11) EP 0 778 955 B1

(12) EUROPÄISCHE PATENTSCHRIFT

(45) Veröffentlichungstag und Bekanntmachung des Hinweises auf die Patenterteilung:
20.01.1999 Patentblatt 1999/03

(51) Int Cl.⁶: G01V 7/16

(86) Internationale Anmeldenummer:
PCT/DE95/01180

(21) Anmeldenummer: 95929733.4

(22) Anmeldetag: 30.08.1995

(87) Internationale Veröffentlichungsnummer:
WO 96/07113 (07.03.1996 Gazette 1996/11)

(54) **VORRICHTUNG UND VERFAHREN ZUR GRAVITATIONSMESSUNG**

DEVICE AND PROCESS FOR GRAVITATION MEASUREMENT

PROCEDE ET DISPOSITIF DE MESURE GRAVITATIONNELLE

(84) Benannte Vertragsstaaten:
AT CH DE DK ES FR GB IE IT LI NL

(30) Priorität: 30.08.1994 DE 4430684

(43) Veröffentlichungstag der Anmeldung:
18.06.1997 Patentblatt 1997/25

(73) Patentinhaber: Boedecker, Gerd
82152 Planegg (DE)

(72) Erfinder:
• BOEDECKER, Gerd
D-82152 Planegg (DE)
• LEISMÜLLER, Franz
Marstellplatz 8 D-80539 München (DE)
• NEUMAYER, Karl, Hans
Marstellplatz 8 D-80539 München (DE)

(74) Vertreter: Rasch, Michael
Patent- und Rechtsanwälte Lewinsky & Partner,
Gotthardstrasse 81
80689 München (DE)

(56) Entgegenhaltungen:
WO-A-95/05615          US-A- 4 550 601

• PATENT ABSTRACTS OF JAPAN vol. 017 no.
637 (P-1650) ,25.November 1993 & JP,A,05
205075 (TAISEI CORP) 13.August 1993,
• HEHL K ET AL 'CARBORNE GRAVIMETRY
MERELY A TRIAL OR A METHOD FOR
DETERMINING GRAVITY ON A PROFILE ?'
11.April 1994 , POSITION LOCATION AND
NAVIGATION SYMPOSIUM (PLANS), LAS
VEGAS, APR. 11 - 15, 1994, NR. -, PAGE(S) 376 -
380 , INSTITUTE OF ELECTRICAL AND
ELECTRONICS ENGINEERS siehe Seite 378,
Spalte 1, Zeile 1 - Zeile 8; Tabelle 1

## Beschreibung

Die vorliegende Erfindung betrifft eine Vorrichtung sowie ein Verfahren zur Gravitationsmessung gemäß den Oberbegriffen der unabhängigen Ansprüche.

Die so genannte Gravimetrie oder Schweremessung ist einzuordnen in einen speziellen Bereich der Meßtechnik, der bedeutsam ist zur Bestimmung des Erdschwerefeldes, und damit für die Landes- und Erdmessung, Geologie / Geophysik einschließlich Exploration, Satellitenbahnbestimmung, hochgenaue Navigation insbesondere mit Trägheitsnavigationsgeräten etc.

Geräte zur Schweremessung beruhten früher auf dem Prinzip der Pendelmessung, heute entweder auf dem Prinzip der genauen Vermessung einer Wurf- /Fall-Trajektorie (Weg wenige dm in einer Vakuumkammer) oder auf dem Prinzip einer Federwaage (konstante Masse, Bestimmung der Kraft). Sie lassen sich auch der allgemeineren Gruppe der Beschleunigungsmesser zuordnen, so daß umgekehrt die Gravimeter als speziell für Schweremessungen geeignete Beschleunigungsmesser anzusehen sind. Gravimeter heben sich auch von den Beschleunigungsmessers im allgemeinen durch ihre wesentlich größere Eigenperiode ab. Die weitaus überwiegende Zahl von Beschleunigungsmessern bzw. Gravimetern basiert auf dem Prinzip der Federwaage mit konstanter Masse, wobei oft (und auch bei dem hier verwendetern Beschleunigungsmesser) durch ein Rückkoppelsystem aus (z.B. kapazitivem) Abgriff und (z.B. induktiver) Rückstellkraft die Masse auch bei sich ändernder Beschleunigung in einer Nullage gehalten wird; der dazu notwendige Strom ist dann das Maß für die Beschleunigung.

Der einschlägige Stand der Technik ist insbesondere veröffentlicht in TORGE, W.: Gravimetry, De Gruyter Verlag New York 1989, sowie in einem Tagungsband COLOMBO, O. (ed.): From Mars to Greenland: Charting Gravity with Space and Airborne Instruments, Symposium no 110, Springer Verlag New York etc. 1991

Zur Erläuterung einiger benutzter Begriffe:

- Genauigkeit / Auflösung: Der Begriff Genauigkeit wird beschränkt auf die Beschreibung von instrumenteller Leistungsfähigkeit im Sinne eines mittleren Fehlers bei üblicher Modellierung. Für die Beschreibung der Qualität einer gefundenen Lösung des gesuchten Gravitationsfeldes der Erde ist der Genauigkeitsbegriff gefährlich: Eine quantitative Beschreibung des Gravitationsfeldes der Erde ist immer Ergebnis vieler Einzelmessungen und einer nachgeordneten Auswertung, die in irgend einer Weise auf eine Flächenfunktion führt. Die Charakterisierung dieser Flächenfunktion durch eine Genauigkeitsangabe würde außer acht lassen, auf welche Fläche sich diese Angabe bezieht. Da für den Mittelwert eines größeren Bereiches i.a. mehr Werte zur Verfügung stehen, wäre hierfür bei einer vorgegebenen Aufgabe nominell eine bessere Genauigkeitsangabe - d.h. ein kleiner mittlerer Fehler - gegeben; dies widerspricht aber der plausiblen Anschauung. Dafür ist der Begriff der Auflösung besser geeignet. Obwohl auch nicht ganz scharf definiert, kann man sich etwa folgendes vorstellen: Die Flächenfunktion möge mit Hilfe z.B. einer zweidimensionalen trigonometrischen Reihe, d.h. durch eine Reihe von Wellen abstufter Wellenlänge, und dies in beiden Richtungen, angenähert sein. Die Welle mit der kürzesten Wellenlänge, deren Amplitude noch signifikant von Null unterschieden ist, entspräche der Auflösung. Diese Interpretation ist zwar auch nicht ganz scharf, da z.B. nach dem Signifikanzniveau und nach der Abstufung der angenommenen Wellenlänge gefragt werden könnte. Für unseren Zweck ist eine solche weitergehende Diskussion jedoch nicht notwendig.

- Gravitation: Im Zusammenhang mit der Gravimetrie auf der Erde ist meist vom Erdschwerefeld die Rede. Im folgenden wird der Begriff der Gravitation vorgezogen, da es überwiegend tatsächlich eher um die Gravitation geht. Bei 'Gravitation' ist hier die spezifische Kraft mit der Dimension $m/s^2$ gemeint, die in der Dimension einer Beschleunigung entspricht. Es sei aber erinnert, daß die sog. Erdschwere sich zusammensetzt aus der Gravitation und der Zentrifugal(-beschleunigung) wegen der Erdrotation. Letztere beträgt maximal 5 Promille der Gravitation.

- Inertialraum: Jede Bewegungsänderung einer Masse erfordert wegen ihrer Trägheit eine Kraft bzw. Energie, auch wenn man sich die nahegelegenen gravitierenden Massen fortgeschafft denkt. Ein (im Nahbereich als leer gedachter) Raum mit einem Bezugssystem, gegenüber dem man eine solche Bewegungsänderung beobachten könnte, ist der Inertialraum.

- Raumlage: Für die geometrische Einordnung eines nicht-punkförmigen Körpers in ein Bezugsystem ist außer Kenntnis seiner Position auch die seiner eigenen Ausrichtung notwendig. Sie könnte auch als Orientierung bezeichnet werden. Beschrieben wird sie durch die Winkel gegenüber den Achsen eines Bezugsrahmens.

Eine grundsätzliche Schwierigkeit bei der Gravimetrie von bewegten Trägern aus ist die Tatsache, daß auf Grund des Äquivalenzprinzips ein Beschleunigungsmesser die Summe von gravitativer Beschleunigung g und kinematischer Beschleunigung b als Meßwert $a = b+g$ anzeigt. Ist man nur an der gravitativen Beschleunigung g interessiert, muß man die kinematische b (aus der Bewegung des Trägers) eliminieren. In der klassischen Vorgehensweise benutzt man zwei sich ergänzende Methoden:

1. Das Gravimeter wird gegenüber den Rotationsbewegungen des Trägers mit Hilfe einer kreiselstabilisierten Plattform isoliert, die Input-Achse des Sensors damit vertikal gehalten.

2. Die Translationsbewegungen, insbesondere vertikale, werden klein zu halten versucht, z.B. durch Verwendung von großen Flugzeugen und Schiffen und/oder besonderen Aufwand bei der Stabilisierung bzw. Steuerung. Die restlichen kinematischen Vertikalbeschleunigungen b werden durch lange Mittehungszeiten der Meßwerte a herausgefiltert, so daß g übrig bleibt. Zum Teil wird b auch aus Positionsbeobachtungen oder Barometerbeobachtungen ermittelt; dies allerdings dann lediglich für die Vertikalkomponente und ohne Berücksichtigung der Raumlage des Flugzeugs und seiner Änderungen.

Da grundsätzlich die Gravitation eine vektorielle Größe ist, ist eine Bestimmung in drei Komponenten interessant. Die Vektorgravimetrie ist jedoch noch nicht realisiert, man beschränkt sich bisher auf die vertikale Komponente.

Die konventionelle Flug-/ Schiffsgravimetrie hat eine Reihe von Nachteilen. So ist diese recht aufwendig wegen der kreiselstabilisierten Platformen, der größeren Fahrzeuge und des hohen Steueraufwandes.

Die verwendeten Gravimeter eignen sich nur für die Bestimmung der Vertikalkomponente, eine Vektorgravimetrie ist damit unmöglich. Wo überhaupt Horizontalkomponenten der Beschleunigung des Trägers gemessen werden, so nur wegen der Korrektur der Vertikalkomponente um den Cross-Coupling-Effekt. Die lange Eigenperiode der verwendeten Gravimeter erlaubt keine phasengenaue Kombination mit anderen Meßgrößen mit einer Abtastrate von 1 Hertz oder schneller.

Die kinematischen Beschleunigungen b werden entweder nicht erfaßt und dann als rein zufallsbedingt in einem Tiefpaßfilter eliminiert, so daß das gefilterte Signal a der Gravitation g gleichgesetzt wird; sofern die kinematischen Beschleunigungen erfaßt werden - z.B. durch die Bestimmung der Änderungen der vertikalen Position mittels Satellitennavigation oder Barometer - so nur in der vertikalen Komponente; auch werden sie i.a. zunächst tiefpaßgefiltert.

Die Möglichkeiten der Positionierung unter Zuhilfenahme der Satellitennavigation (vornehmlich des GPS-Systems, "Global Positioning System") für die Gravimetrie werden bisher lediglich für die Positionierung oder für die Vertikalbeschleunigung genutzt. Nicht genutzt wurde bisher die Möglichkeit auch zur Bestimmung der Raumlage des Trägers bzw. deren Änderung, die einen Beitrag zur kinematischen Beschleunigung liefert.

Auf diese Weise ist eine höherfrequente (1 Hz oder schneller) Bestimmung von Signalen des Gravitationsfeldes von vornherein unmöglich gemacht und die erreichte Auflösung z.B. der Fluggravimetrie auf etwa 10 km oder länger beschränkt, dadurch ihre an sich wünschenswerte größere Anwendung behindert.

In der Veröffentlichung von Hehl et al. mit dem Titel "Carborne Gravimetry merely a Trial or a Method for Determining Gravity on a Profile", in "Position Location and Navigation Symposium (Plans)", Las Vegas, Apr. 11-15. 1994, Seiten 376-380, IEEE ist eine Vorgehensweise beschrieben, bei der die 3D-Koordination des Gravimetermeßflugzeugs aus Phasenmessungen und die Geschwindigkeitskomponenten mit Hilfe von GPS-Beobachtungen bestimmt werden. Diese werden für die Positionsbestimmung und für die Eötvös-Korrektion von Gravimetermessungen benutzt. Hieraus werden auch kinematische Beschleunigungen abgeleitet, die zur Reduktion von mit einem bestimmten Schriffsgravimeter gemessenen Vertikalbeschleunigungen dienen, um daraus die Vertikalkomponenten des irdischen Gravitationsfeldes abzuleiten. Das System ist beschränkt auf die Vertikalkomponente; eine Realisierung der Vektorgravimetrie ist nicht möglich.

Auch die bisher notwendige Verwendung größerer Fahrzeuge beschränkt die Operation in niederen Flughöhen bzw. in flachen Gewässern und damit wiederum die Entdeckung von feineren Strukturen des Gravitationsfeldes.

Ebenfalls wurde bisher nicht die Möglichkeit genutzt. die Vorkenntnis vom stochastischen Verhalten des irdischen Gravitationsfeldes bei der Filterung der Meßwerte einzubringen.

Der vorliegenden Erfindung liegt daher die Aufgabe zugrunde. eine gattungsgemäße Vorrichtung bzw. ein Verfahren anzugeben, die bzw. das eine höhere Auflösung, also eine Aufdeckung kleinerer Strukturen des Gravitationsfeldes der Erde insbesondere vom Flugzeug / Schiff aus erlaubt. Darüber hinaus soll die Verwendung einfacherer Gerätekomponenten ermöglicht werden. Die Bestimmung aller drei Komponenten des Gravitationsfeldes der Erde mittels Vektorgravimetrie soll mit hinreichender Genauigkeit möglich werden.

Erfindungsgemäß werden diese Aufgaben durch die in den Patentansprüchen 1 und 5 angegebenen Merkmale gelöst.

Die hier angemeldete Erfindung verringert den erforderlichen baulichen Aufwand und damit die Kosten der Messungen und steigert die räumliche Auflösung und damit die Leistungsfähigkeit erheblich.

Die Erfindung beruht dabei auf der Erkenntnis, daß mittels Satellitennavigation auch die Raumlage des mit dem Gravitationssensor versehenen Trägers bestimmt werden kann. Die zeitliche Änderung von Position und Raumlage, da über das Satellitennavigationssystem unmittelbar in den Inertialraum transformierbar, erlaubt, wie unten im einzelnen erläutert, die Berechnung der kinematischen Beschleunigung b unter Berücksichtigung des Anteils aus der Rotation des Trägers und damit eine Reduktion des Beschleunigungsmessersignals a gemäß g = a - b, also die Berechnung der Gravitation. Der Beitrag für b aus der Rotation des Trägers ist dabei u.a. abhängig von der Anordnung der Beschleunigungsmesser am Träger, im allgemeinen aber so groß, daß er nicht vernachlässigt werden darf. Dies bestätigt die Notwendigkeit einer Bestimmung der Raumlage. Entsprechend den heute erreichten instrumentellen Genauigkeiten ist b aus der Satellitennavigation auf etwa $10^{-6}$ der Gravitation der Erde zu ermitteln und damit etwa gleich genau wie a und das Genauigkeitsziel für g aus der Flug-/ Schiffsgravimetrie; diese Zahlenangaben beziehen sich auf Sekundenmittelwerte.

Die erfindungsgemäß vorgeschlagene konsequente Nutzung der Satellitennavigation ermöglicht nicht nur die Bestimmung der kinematischen Beschleunigung b in einer Richtung, sondern als vollen Vektor $\underline{b}$ (im folgenden weist die Unterstreichung, z.B. $\underline{b}$, explizit auf die Vektoreigenschaft hin).

Ein Vorteil der Satellitennavigation ist die kurze Phasenverzögerung zwischen Signaleingang (Positionsänderung) und -ausgang (Positionsangabe) und deren Eichbarkeit. Diese Eigenschaft wird hier, für die Ermittlung von (hochfrequenten) Beschleunigungen, noch konsequenter genutzt als beispielsweise bei der Positionierung und Raumlagebestimmung für die Aerophotogrammetrie. Dies eröffnet die phasenrichtige Kombination von b mit anderen Beobachtungen.

Die Erfindung ermöglicht die Verwendung von hochwertigen marktüblichen Beschleunigungsmessern anstelle spezialisierter Gravimeter. Ein Vorteil ist der geringere Preis.

Diese Beschleunigungsmesser können im Gegensatz zu spezialisierten Gravimetern in jeder Lage eingebaut werden, können also auf dem Träger fest - allenfalls durch Dämpfungselemente getrennt - montiert werden. Dies erspart den Aufwand für eine kreiselstabilisierte Plattform.

Die Vibrationen des Trägers - z.B. durch den Motor - führen im allgemeinen über die sogenannte Rektifikation zu einer konstanten Fehlanzeige eines Beschleunigungsmessers. Durch die gleichbleibende Geometrie zwischen Vibrationsquelle und Beschleunigungsmesser werden - anders als bei der Verwendung einer kreiselstabilisierten Plattform - Fehler aus der Änderung der gegenseitigen Lage vermieden.

Ein weiterer Vorteil gegenüber den speziellen Gravimetern liegt in der kürzeren Eigenperiode, also kurzer Phasenverzögerung zwischen Signaleingang (Beschleunigung) und -ausgang (elektr. Signal) im interessierenden Frequenzband. Dies ermöglicht die phasenrichtige Kombination von a mit anderen Beobachtungen.

Damit wird gemeinsam mit einem auf dem Träger fest montierten (engl. 'strap down') Beschleunigungsmessertripel, der den gemessenen Beschleunigungsvektor $\underline{a}$ liefert, die Ermittlung des Gravitationsvektors $\underline{g}$ möglich gemäß $\underline{g} = \underline{a} - \underline{b}$, also die Vektorgravimetrie.

Die Kombination der beiden vorgenannten Signale a und b unter Erhalt der Phasenbeziehung erfordert ein gleichzeitiges Triggersignal für den Abruf beider Werte. Dafür wird das bei den meisten professionellen GPS-Empfängern verfügbare lpps (1 pulse per second) Signal benutzt, das von den Atomuhren an Bord der Satelliten gesteuert wird und daher höchste Präzision aufweist. Dies eröffnet die Möglichkeit einer Kombination bei einer hohen Meßfrequenz (größer oder gleich 1 Hz) und Realisierung der o.a. Gleichung von g = a - b (skalar oder vektoriell) für jede Einzelmessung. Die hohe Meßfrequenz wiederum ermöglicht im bewegten Träger eine hohe räumliche Auflösung des Schwerefeldes. Zum Beispiel erfolgt bei einer Meßfrequenz von 1 Hz in einer kleinen Propellermaschine eine Messung etwa je 50 m Flugweg. Dies ist eine bessere Ausgangsbasis für eine hohe räumliche Auflösung als bei der konventionellen Fluggravimetrie, ungeachtet der in jedem Falle nötigen Filterung.

Eine weitere Ausführung der Erfindung sieht die Nutzung der genauen Zeit des Satellitennavigationssystems zur Steuerung der dem Beschleunigungsmesser nachgeschalteten Ausleseelektronik vor. Die Genauigkeit der Realisierung des Integrationsintervalles muß dabei der für das Signal a gewünschten Genauigkeit entsprechen; diese wiederum orientiert sich an der gewünschten Endgenauigkeit von $10^{-6}$ (oder besser) der Gravitation der Erde. Damit muß z.B. bei einer Meßfrequenz von 1 Hz die Torzeit des verwendeten Zählers auf $10^{-6}$ s (oder besser) genau gesteuert werden. Anstelle einer ansonsten auch möglichen Lösung mit einer entsprechend hochwertigen Uhr wurde hier das o.a. lpps-Zeitsignal des Satellitennavigationssystems genutzt, damit weiter der Gesamtaufwand verringert.

Im Rahmen der Erfindung wird eine fortgeschrittene numerische Filtermethode angewendet. Diese beruht auf der Erkenntnis, daß das Kernproblem der Gravimetrie von bewegten Trägern aus, nämlich die Trennung von kinematischen Beschleunigungen und gravitativen Beschleunigungen aus den Messungen mit einem Beschleunigungsmesser auch auf die Tatsache gestützt werden kann, daß das Gravitationsfeld als stochastischer Prozeß (also Zufallsprozeß) betrachtet werden kann, über den gewisse Parameter bekannt sind; vereinfachend gesagt, weiß man aus Erfahrung, wie stark sich im Mittel das Schwerefeld über bestimmte Entfernungen ändert. Bei Kenntnis des Weges bzw. der Geschwindigkeit des Meßfahrzeuges läßt sich diese Funktion des Ortes (genauer: der Entfernung) in eine Funktion der Zeit überführen. Diese somit zeitlichen Änderungen des gravitativen Signalanteils sind verglichen mit den Bewegungen des Trägers (z.B. Flugzeug / Schiff) niederfrequent. Im allgemeinen ist daher ein Tiefpaßfilter für das Meßsignal a zu entwerfen, um daraus g als tieffrequenten Anteil zu berechnen. Die bisher für diese Aufgabe angewendeten numerischen Filter nutzen beliebige Filtermethoden, für die Software zur Verfugung steht; deren Koeffizienten werden heuristisch angepaßt; um ein optimales Ergebnis zu erreichen, d. h. die bekannte Vorinformation über das stochastische Verhalten des Gravitationsfeldes wird nicht genutzt. Im Rahmen dieser Erfindung wird mit entsprechenden Programmen die sog. dynamische Matrix $\mathbf{F}_n$ eines Formfil-

ters innerhalb eines Kalmanfilters so entworfen, daß das stochastische Verhalten der Zustandsparameter für die Gravitation g dem stochastischen Verhalten des wirklichen Gravitationsfeldes entspricht. Der Beitrag zur Gesamterfindung besteht darin, daß auf der Grundlage der bekannten Kalmanfilterung und Formfilterung (vgl. P.S. MAYBECK: Stochastic Models, Estimation, and Control, vol. 1 & 2; Academic Press, Inc., Boston etc. 1979/82; insbes. vol. 1, S. 8, 180ff, 186f 316, 321, 345; vol. 2, S. 54) ein Verfahren zur numerischen Approximation der dynamischen Matrix $\mathbf{F}_n$ durch die Kenntnis der numerisch gegebenen Kovarianz des Gravitationsfeldes entwickelt wurde (H.K. NEUMAYER: Modellierung stochastisch korrelierter Signalanteile in geodätischen Beobachtungen, angewendet insbesondere auf die Bestimmung des Schwerefeldes aus der Kombination von kinematischen und dynamischen Messungen; Dissertation TU München, erscheint 1995). Das so entworfene Tiefpaßfilter ist also physikalisch aus dem stochastischen Verhalten des Gravitationsfeldes begründet und daher leistungsfähiger als ein 'physikalisch blindes' Tiefpaßfilter.

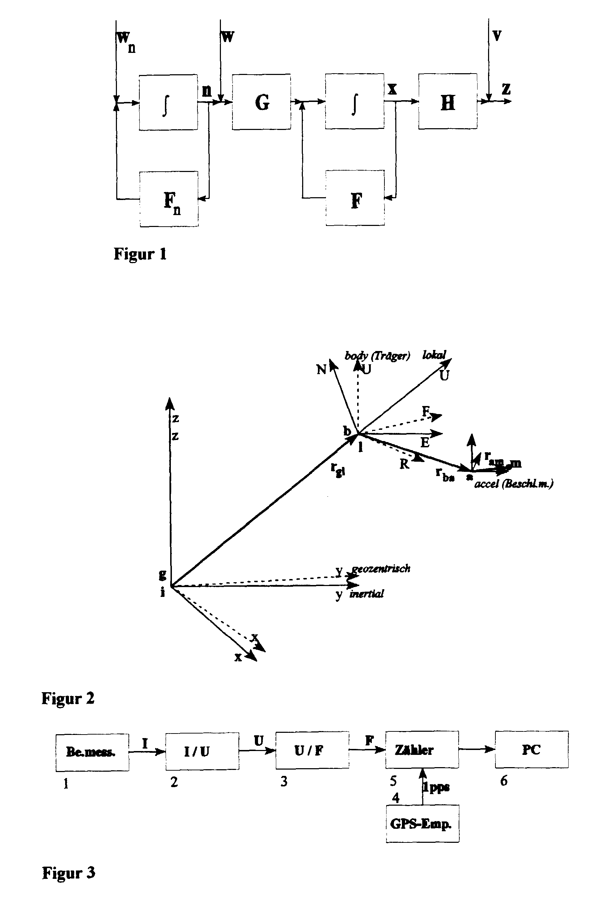

Die Rolle von $\mathbf{F}_n$ innerhalb des gesamten Filtermodells wird durch das in Fig. 1 dargestellte Filterdiagramm erklärt, wobei das Formfilter als Subsystem des Gesamtsystems im linken Teil dargestellt ist und die Variablen erklärt sind als: $\mathbf{w}_n$ = weißes Rauschen als Anregung für das Formfilter, $\mathbf{F}_n$ = dynamische Matrix für das Formfilter, $\mathbf{n}$ = Ausgang des Formfilters, $\mathbf{F}$ = dynamische Matrix für die übrigen (deterministischen) Zustandsgrößen, $\mathbf{w}$ = weißes Rauschen als Anregung für das Hauptsystem, $\mathbf{x}$ = Zustandsgrößen, $\mathbf{H}$ = Beobachtungsmatrix, $\mathbf{v}$ = Residuen, $\mathbf{z}$ = Beobachtungen.

Die Grundlage des mathematisch-physikalischen Modells läßt sich anhand der folgenden Formel und Fig. 2 erläutern:

$$r_{im} = R_i^{\,g}(r_{gl} + R_g^{\,l} R_l^{\,b}(r_{ba} + R_b^{\,a} r_{am}))$$

wobei die r jeweils Vektoren und die R jeweils Rotationsmatrizen sind.

In obiger Formel wird zunächst die Position einer Probemasse m eines Beschleunigungsmessers im Inertialraum durch die Position bezogen auf den Beschleunigungsmesser selbst und eine Abfolge von Transformationen beschrieben.

Die Vektoren $r_{ij}$ sind durch die Skizze von Fig. 2 erläutert, die $R_i^{\,j}$ sind Rotationsmatrizen zwischen den Referenzrahmen. Dabei sind die mit 'am' und 'ba' bzw. 'ab' indizierten Größen durch Gerätekonstanten des Beschleunigungsmessers und den Bezug auf das System der GPS-Antennen gegeben, der durch konventionelle Vermessung bestimmt werden kann; die mit 'lb', 'lg' bzw. 'gl' indizierten Größen ergeben sich aus den GPS-Positions- und - Raumlagebeobachtungen. Die zweite Ableitung von $r_{im}$ nach der Zeit ergibt die Beschleunigung im Inertialraum, oben bereits mit b bezeichnet. Subtrahiert man von der gemessenen Beschleunigung a die so berechnete kinematische b , so bleibt die besuchte gravitative g übrig. Diese Größe ist durch verschiedene Fehlmänflüsse stark verrauscht. Die numerische Filterung wurde oben beschrieben.

Konzeptionell ist die beschriebene Lösung besonders geeignet zur Vektorgravimetrie, im Ausführungsbeispiel wurde zunächst ein Beschleunigungsmesser benutzt. Die Anmeldung läßt jedoch die Anzahl der benutzten Beschleunigungsmesser offen, die Darstellungen gelten für einen ebenso wie für mehrere.

Eine für die Gravimetrie von bewegten Trägern aus interessante Genauigkeit ist etwa $10^{-6}\, g_0$, wobei $g_0$ die volle Gravitation der Erde bedeutet, die kinematischen Beschleunigungen sind ebenfalls von der Größenordnung von $g_0$. Auf diese Gößen bzw. Genauigkeit ist die Konstruktion einzurichten.

Für das hier beschriebene neue Vorgehen benötigt man an Stelle eines aufwendigen Flug- / Schiffsgravimeters (einige 100.000,- DM) einen relativ billigen (ca. 10.000,- DM) Beschleunigungsmesser ausreichender Auflösung, eine intelligente Elektronik zur Signalverarbeitung und einen speziellen GPS-Empfanger, der nicht nur wie übliche geodätische GPS-Empfanger die Position (relativ mit mm/cm-Genauigkeit), sondern auch die Raumlage des Trägers (mit einigen 0.01°) zu bestimmen gestattet. Hinzu kommt das oben beschriebene numerische Filter.

In Bezug auf das Zusammenwirken der Bauteile und den Signalfluß besteht die Konfiguration aus den in Fig. 3 dargestellten Komponenten:

1 bezeichnet einen oder mehrere hochempfindliche Beschleunigungsmesser. Ausgang ist ein der Beschleunigung (in einer definierten Richtung) proportionaler Strom I. Der rohe Beschleunigungsmesser 1 wurde in die runde Bohrung eines Würfels aus Gußstahl montiert. Dieser ist außen wärmeisoliert. Der Würfel ist auf eine Platte mit Libelle und drei Fußschrauben montiert, diese wiederum auf eine zweite Platte, die über Dämpfungselemente mit dem Träger (Flugzeug / Schiff) verbunden ist. Die Montage verfolgt folgende Ziele: Der rohe Beschleunungsmesser als Zylinder mit drei Flanschen und Gesamtabmessungen von ca. 3 cm wird durch Montage im Würfel eindeutig orientiert, damit kann er in Bezug auf z.B. die Satellitennavigations-Antennen nach Richtung und Position eingemessen werden. Der Gußstahl (möglichst austhenitischer Stahl) sorgt durch die Kombination von Wärmekapazität, Wärmeleitung und geringem Warme-Ausdehungskoeffizienten in Verbindung mit der ihn umgebenden Isolierung dafür, daß abrupte äußere Temperaturänderungen nur zu kleinen und langsamen Temperaturänderungen im Beschleunigungsmesser 1 selbst führen; diese werden intern gemessen und zu Korrekturen genutzt. Eine aktive Thermostatisierung wird durch diese Anordnung überflüssig. Die Masse des Stahlwürfels in Verbindung mit den mechanischen Dämpfungselementen führt zur Dämpfung hochfrequenter Vibrationen des Flugzeuges.

Die Fußschrauben in Verbindung mit den Libellen erlauben eine Lotrechtstellung des Beschleunigungsmessers.

Der variierende Strom I wird in einem Strom-Spannungswandler 2 in eine variiende Spannung U umgeformt.

Die Spannung U steuert in einem VCO (voltage controlled oscillator = Spannungs-Frequenz-Wandler) 3 eine Frequenz F. Die Komponenten 2,3 sind in Anpassung an den Strom I aus dem Beschleunigungsmesser 1 so ausgelegt, daß bei der Beschleunigung $g_0$ eine Frequenz von etwa 2 MHz entsteht.

Der GPS-Empfanger 4 gibt jede Sekunde Position (3D, relativ auf mm), Geschwindigkeit und Raumlagewinkel des Flugzeuges, also Rollwinkel, Nickinkel und Richtung, in einem globalen System. Außerdem kann ein Sekundenimpuls genutzt werden. Da die interne Uhr des GPS-Empfängers durch die Atomuhren an Bord der GPS-Satelliten gesteuert wird, ist der Zeitimpuls ('lpps') besser als $1 \cdot 10^{-6}$. Anstelle eines Empfangers im GPS-System kann ein ähnlich ausgelegter in einem anderen Satellitenpositionierungsystem genutzt werden, z.B. im GLONASS. GPS ist z.Z. weitaus am meisten verbreitet.

Die Zählerelektronik 5 hat folgende Charakteristika: Sie zählt im Sekundentakt die ca. $10^6$ Schwingungen F aus dem VCO 3. Durch das 1pps-Signal des GPS-Empfängers 4 wird sichergestellt, daß die Beschleunigungswerte aus dem Beschleunigungsmesser 1 und aus dem GPS-Empfänger 4 streng simultan sind. Außerdem sichert die hohe Genauigkeit des lpps von besser als $1 \cdot 10^{-6}$ durch genaue Realisierung der Zähler- Torzeit, daß die Anzahl der Schwingungen vollständig korrekt gezählt wird. Die Zählerelektronik 5 besorgt ferner die Aufbereitung des 1pps-Impulses. Zwei Einzelzähler in der Zählerelektronik zählen abwechselnd und ohne Totzeit. Im gerade nicht zählenden Zähler wird der digitale Werte mit 21 bit Wortlänge an einen registrierenden PC 6 weitergereicht.

Ausführungsbeispiel

Die obige Konfiguration wurde, wie Text angegeben, realisiert mit folgenden Geräten / Bauteilen:

Beschleunigungsmesser 1 der Firma Sundstrand, QA 3000-20
Strom-Spannungswandler 2 durch Standardbauteil mit geringer Drift und geringem Temperatureinfluß
Spannungsgesteuerter Oszillator 3 durch Standardbauteil mit geringer Drift und geringer Temperaturempfindlichkeit
GPS-Empfänger 4: Ashtech3DF der Firma Ashtech
Zählerelektronik 5
PC 6: Notebook

Im Zusammenhang mit dem Ausführungsbeispiel wurde die Nutzung des GPS-Systems angenommen. Ebenso könnte ein anderes geeignetes Satellitennavigationssystem genutzt werden, z.Z. z.B. noch GLONASS.

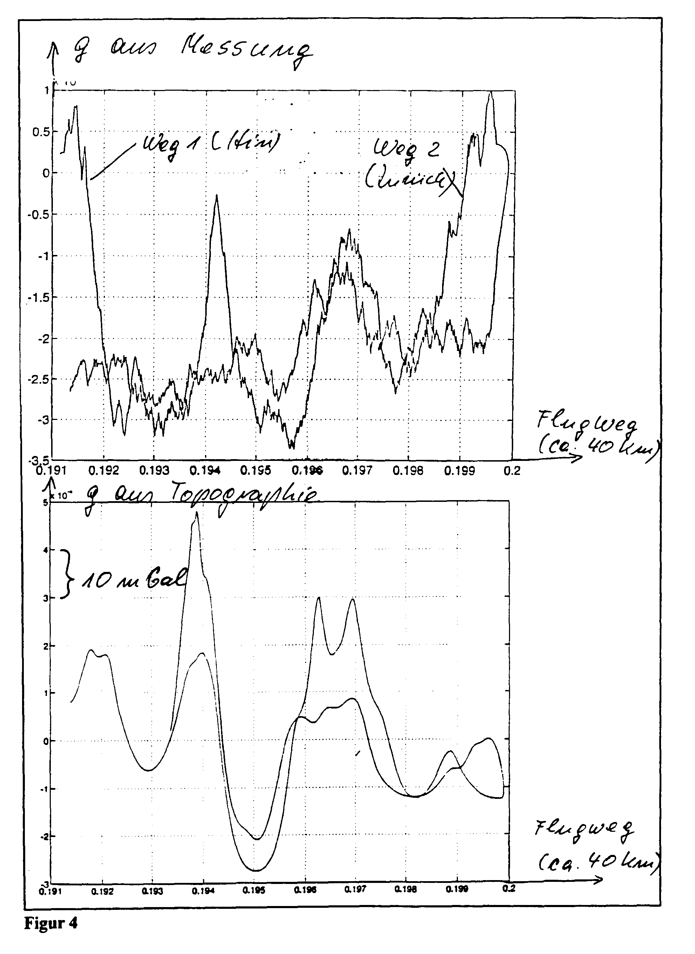

Die Fig. 4 zeigt die graphische Darstellung vorläufiger Ergebnisse eines Testfluges über einem Teil der bayerischen Alpen mit der o.a. Ausrüstung in einem einmotorigen Propellerflugzeug des Typs Cessna 206. Die GPS-Antennen waren auf der Oberseite des Fluzeuges montiert, die sehr kleine und kompakte Geräteausstattung war im Inneren der Maschine, wobei der Beschleunigungmesser über die Sitzschienen fest mit dem Flugzeug verbunden waren. Die die digitalen Sekundenmittelwerte aus dem Beschleunigungsmesser wurden in einem Notebook gespeichert, die simultan durchgeführten GPS-Beobachtungen wurden in dem Empfänger selbst gespeichert. Die Synchronisation erfolgte über das lpps-Signal. Entsprechend dem normalen Vorgehen bei geodätischen GPS-Beobachtungen wurde ein Referenzempfänger am Flugplatz benutzt, da nur die differentiellen Beobachtungen eine ausreichende Genauigkeit gewährleisten. Die Daten wurden häuslich ausgewertet, d.h. die o.a. Gleichung wurde ausgewertet, die zweite zeitliche Ableitung gebildet zur Gewinnung der inertialen Beschleunigungen, diese subtrahiert von den Messungen des Beschleunigungssensors, das Ergebnis entsprechend dem oben dargestellten Filtermodell gefiltert. Das so gewonnene Ergebnis für die vertikale Komponente der Gravitation ist im oberen Teil der Fig. 4 dargestellt; dazu sei erklärt, daß das Profil etwa 38 km lang war, ein Parallelprofil etwa 5 km versetzt wurde zurückgeflogen. Man erkennt die Stabilisierungsphase des numerischen Filters jeweils am Anfang (links oben) bzw. nach der Wende zum Rückflug (rechts). Im unteren Teil der Abbildung sieht man die jeweils längs des Flugweges aus topographischen Daten gerechneten Werte der Gravitation. Die vertikale Ausdehnung einer Teilabbildung entspricht je etwa 80 mGal $= 80 \cdot 10^{-5}$ ms$^{-2}$. Da die Topographie nur einen Teil der Variation des Gravitationsfeldes erklärt, ist eine endgültige Fehlerabschätzung auf diesem Wege allein nicht möglich, eine Genauigkeit von etwa 10 mGal wurde jedoch bereits erreicht bei sehr hoher Auflösung; eine Genauigket von 1 mGal bei einer räumlichen Auflösung von 1...3 km aus Flugmessungen erscheint als sehr wahrscheinlich erreichbar. Unter Beibehaltung der Konzeption sollten weitere Verbesserungen im Detail noch eine Steigerung auf 0,5...0,1 mGal erlauben.

**Patentansprüche**

1. Vorrichtung zur Gravitationsmessung, bestehend aus einem auf einem Träger angebrachten Beschleunigungssensor (1), einem Satellitennavigationsempfänger (4) sowie einer Recheneinheit (6), **dadurch gekennzeichnet,** daß der Satellitennavigationsempfänger (4) derart ausgestaltet ist, daß er neben der Position auch die Raumlagewinkel des Trägers zu ermitteln gestattet und die Recheneinheit (6) aus der zeitlichen Änderung von Position und Raumlage die volle Kinematik im Inertialraum ermittelt und durch Abzug der kinematischen Beschleunigung von der im Beschleunigungssensor (1) gemessenen die gesuchte Gravitation ermittelt.

2. Vorrichtung nach Anspruch 1, dadurch gekennzeichnet, daß der Beschleunigungssensor (1) fest mit dem Träger verbunden ist, wobei allenfalls Dämpfungselemente zwischen Beschleunigungssensor und Träger vorgesehen sind.

3. Vorrichtung nach Anspruch 1, dadurch gekennzeichnet, daß der Beschleunigungssensor (1) ein einziger oder ein Tripel von zueinander nicht parallelen, vorzugsweise senkrecht stehenden Beschleunigungsmessern ist.

4. Vorrichtung nach Anspruch 1, dadurch gekennzeichnet, daß der Satellitennavigationsempfänger (4) ein einziges mit drei oder mehr Antennen ausgestattetes Gerät oder eine Vorrichtung aus drei oder mehr einzelnen, miteinander verbundenen Geräten ist, die jedenfalls die Bestimmung der Raumlagewinkel ermöglichen.

5. Verfahren zur Gravitationsmessung mittels eines auf einem Träger angebrachten Beschleunigungssensors und eines Satellitennavigationsempfängers, **dadurch gekennzeichnet**, daß das Signal des Satellitennavigationsempfangers zur Bestimmung von Position und Raumlagewinkel des Trägers verwendet sowie aus ihrer zeitlichen Änderung die volle Kinematik im Inertialraum ermittelt wird, um damit die gemessenen Beschleunigungen auf die gesuchte Gravitation zu reduzieren.

6. Verfahren nach Anspruch 5, dadurch gekennzeichnet, daß ein Zeitsignal des Satellitennavigationsempfängers zur Beschleunigungsmessung verwendet wird.

7. Verfahren nach Anspruch 6, dadurch gekennzeichnet, daß das Zeitsignal des Satellitennavigationsempfängers zur Synchronisierung der Beschleunigungsmessung verwendet wird.

8. Verfahren nach Anspruch 6 und 7, dadurch gekennzeichnet, daß das Zeitsignal des Satellitennavigationsempfängers zur Steuerung der Torzeit eines Zählers verwendet wird, der eine für die Meßauswertung erzeugte beschleunigungsproportionale Frequenz zählt.

9. Verfahren nach Anspruch 5, dadurch gekennzeichnet, daß das in eine beschleunigungsproportionale Frequenz umgesetzte Signal des Beschleunigungssensors im gleichmäßigen Takt wechselweise von zwei Zählern so ausgewertet wird, daß keine Totzeit entsteht.

10. Verfahren nach Anspruch 5, dadurch gekennzeichnet, daß die gemessenen Beschleunigungswerte sowie aus der Satellitennavigation einer integrierenden digitalen Filterung unterworfen werden.

11. Verfahren nach Anspruch 10, dadurch gekennzeichnet, daß die digitale Filterung mittels eines Formfilters durchgeführt wird, das dem stochastischen Verhalten des Schwerefeldes angepaßt wurde.

**Claims**

1. Apparatus for measuring gravitation, comprising an acceleration sensor (1) mounted on a carrier, a satellite navigation receiver (4) and a computer (6), characterised in that the satellite navigation receiver (4) is configured in such a manner that, in addition to the position, it also permits the orientation angle of the carrier to be determined, and the computer (6) determines the entire kinematics in the inertial space from the change of position and orientation with respect to time and determines the desired gravitation by subtracting the kinematic acceleration from that measured in the acceleration sensor (1).

2. Apparatus according to claim 1, characterised in that the acceleration sensor (1) is securedly connected to the carrier, damping elements possibly being provided between the acceleration sensor and the carrier.

3. Apparatus according to claim 1, characterised in that the acceleration sensor (1) is a single accelerometer or a triple number of accelerometers which are not parallel to one another and preferably extend perpendicularly.

4. Apparatus according to claim 1, characterised in that the satellite navigation receiver (4) is a single instrument provided with three or more antennae, or it is an apparatus comprising three or more individual interconnected instruments which, in any event, permit the determination of the orientation angle.

5. Method of measuring gravitation by means of an acceleration sensor, which is mounted on a carrier, and a satellite navigation receiver, characterised in that the signal of the satellite navigation receiver is used to determine the position and orientation angle of the carrier, and the entire kinematics in the inertial space are determined from their change with respect to time, so as to reduce thereby the measured accelerations to the desired gravitation.

6. Method according to claim 5, characterised in that a time signal of the satellite navigation receiver is used to measure the acceleration.

7. Method according to claim 6, characterised in that the time signal of the satellite navigation receiver is used to synchronise the acceleration measurement.

8. Method according to claims 6 and 7, characterised in that the time signal of the satellite navigation receiver is used to control the gate time of a counter, which counts an acceleration-proportional frequency generated for evaluating measurements.

9. Method according to claim 5, characterised in that the signal of the acceleration sensor, which signal is converted into an acceleration-proportional frequency, is evaluated in uniform synchronism alternately by two numerators so that no dead time is produced.

10. Method according to claim 5, characterised in that the measured acceleration values and those from the satellite navigation are subjected to an integrating digital filtering.

11. Method according to claim 10, characterised in that the digital filtering is accomplished by means of a shaped filter, which has been adapted to the stochastic properties of the gravitational field.

**Revendications**

1. Dispositif de mesure de gravitation, constitué d'un détecteur d'accélération (1) monté sur un support, d'un récepteur de navigation par satellite (4) ainsi que d'une unité de calcul (6), caractérisé en ce que le récepteur de navigation par satellite (4) est conçu d'une façon telle, qu'il permet, en plus de la position, de déterminer également l'angle d'orientation spatiale du support, et l'unité de calcul (6), à partir de la variation dans le temps de la position et de l'orientation spatiale, détermine la cinématique complète dans l'espace inertiel et, par extraction de l'accélération cinématique de celle mesurée dans le détecteur d'accélération (1), détermine la gravitation recherchée.

2. Dispositif selon la revendication 1, caractérisé en ce que le détecteur d'accélération (1) est relié fermement au support, des éléments d'amortissement étant cependant prévus entre le détecteur d'accélération et le support.

3. Dispositif selon la revendication 1, caractérisé en ce que le détecteur d'accélération (1) est un accéléromètre unique ou un groupe de trois accéléromètres non parallèles entre eux, de préférence perpendiculaires l'un à l'autre.

4. Dispositif selon la revendication 1, caractérisé en ce que le récepteur de navigation par satellite (4) est un appareil unique équipé de trois, ou de plus de trois, antennes ou un dispositif constitué de trois, ou de plus de trois, appareils individuels reliés l'un à l'autre, qui permettent au moins la détermination de l'angle d'orientation spatiale.

5. Procédé pour la mesure de la gravitation au moyen d'un détecteur d'accélération, monté sur un support, et d'un récepteur de navigation par satellite, caractérisé en ce que le signal du récepteur de navigation par satellite est utilisé pour la détermination de la position et de l'angle d'orientation spatiale du support et, à partir de sa variation dans le temps, la cinématique complète dans l'espace inertiel est déterminée, pour ainsi réduire les accélérations mesurées à la gravitation recherchée.

6. Procédé selon la revendication 5, caractérisé en ce qu'un signal horaire du récepteur de navigation par satellite est utilisé pour la mesure d'accélération.

7. Procédé selon la revendication 6, caractérisé en ce que le signal horaire du récepteur de navigation par satellite est utilisé pour la synchronisation de la mesure d'accélération.

8. Procédé selon la revendication 6 ou 7, caractérisé en ce que le signal horaire du récepteur de navigation par satellite est utilisé pour la commande du temps de déclenchement d'un compteur, qui compte une fréquence proportionnelle à l'accélération, produite pour l'évaluation de la mesure.

9. Procédé selon la revendication 5, caractérisé en ce que le signal du détecteur d'accélération, converti en une fréquence proportionnelle à l'accélération, est évalué par deux compteurs en alternance, suivant un cycle constant, de telle sorte qu'il n'apparaisse pas de temps mort.

10. Procédé selon la revendication 5, caractérisé en ce que les valeurs d'accélération mesurées, ainsi que celles tirées de la navigation par satellite, sont soumises à un filtrage numérique intégrateur.

11. Procédé selon la revendication 10, caractérisé en ce que le filtrage numérique est effectué au moyen d'un filtre de forme, qui a été adapté à l'allure de variation stochastique du champ de gravitation.

EP 0 778 955 B1

**Figur 1**

**Figur 2**

**Figur 3**

**Figur 4**